# EUROPEAN PATENT APPLICATION

(11) **EP 4 564 712 A1**
(43) Date of publication of application: **04.06.2025**
(21) Application number: 23851529.0
(22) Date of filing: 11.07.2023
(51) Int. Cl.: H04L 1/00

(54) **CLOCK SYNCHRONIZATION GUARANTEE METHOD AND APPARATUS**

(30) Priority: 08.08.2022 CN 202210945522
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Gill Jennings & Every LLP
(86) International application number: PCT/CN2023/106838
(87) International publication number: WO 2024/032304

(57) **Abstract**

This application relates to the field of communication technologies, and discloses a clock synchronization assurance method and an apparatus, to ensure clock synchronization between a terminal device and a user plane function network element when a clock of an access network device that provides timing for the terminal device is not synchronized with a clock of the user plane function network element. The method includes: A clock management network element receives a generalized precision time protocol gPTP clock synchronization request from an application function network element, where the gPTP clock synchronization request includes an identifier of a target user plane function network element and an identifier of a target terminal device. The clock management network element obtains a clock offset between the target user plane function network element and a target access network device when a clock of the target user plane function network element is not synchronized with a clock of the target terminal device, where the target access network device is an access network device providing timing for the target terminal device. The clock management network element sends the clock offset to the target user plane function network element or the target terminal device, where the clock offset is used by the target access network device or the target terminal device for clock synchronization.

## Description

### CROSS-REFERENCE TO RELATED APPLICATIONS

This application claims priority to Chinese Patent Application No. 202210945522.3, filed with the China National Intellectual Property Administration on August 8, 2022 and entitled "CLOCK SYNCHRONIZATION ASSURANCE METHOD AND APPARATUS", which is incorporated herein by reference in its entirety.

### TECHNICAL FIELD

Embodiments of this application relate to the field of communication technologies, and in particular, to a clock synchronization assurance method and an apparatus.

### BACKGROUND

A timing function of a 5th generation (5th generation, 5G) network is a network function that can be opened to the external to provide timing for another device. A timing exposure capability of the 5G network may be activated and deactivated by an application function (application function, AF) network element. At present, in a discussion phase of industrial Internet requirements, a service requirement of time sensitive network (time sensitive network, TSN) supporting is clarified. Most tasks are based on a time reference in fields such as communication and industrial control. Therefore, precise clock synchronization is a basic requirement. For the TSN, problems of clock synchronization and delay calculation in the network need to be first resolved, to ensure that task scheduling of the entire network is highly consistent. For many vertical industry users, the users hope that the 5G network can replace wired access of the conventional TSN. When a terminal device accesses the TSN by using a 5G communication system, an existing control function of the TSN can be implemented, and various performance indicators of TSN data transmission can be satisfied.

A basic idea of a TSN clock synchronization solution is as follows: A terminal device, an access network device (such as a gNB), a user plane function (user plane function, UPF) network element, and the like in the 5G communication system first synchronize with a 5G communication system clock. TSN clock information is carried in a generalized precision time protocol (general precise time protocol, gPTP) synchronization packet and is transmitted to a device-side TSN protocol translation function (device-side TSN translator, DS-TT) through a network-side TSN protocol translation function (network TSN translator, NW-TT). The NW-TT is usually a functional module in the UPF network element, and the DS-TT network element is usually a functional module in the terminal device. The DS-TT in the terminal device calculates residence time (residence time) of the gPTP synchronization packet in the 5G communication system based on timestamp information in the gPTP synchronization packet, and finally obtains accurate TSN clock information based on the TSN clock information carried in the gPTP synchronization packet and the residence time in the 5G communication system.

The 5G communication system is a part of a TSN transmission network, and 5G clock synchronization is very important for TSN clock synchronization. Currently, the TSN clock synchronization solution is based on clock synchronization between the access network device that provides timing for the terminal device and the user plane function network element. However, when a 5G clock is abnormal/switched, a clock of the access network device that provides timing for the terminal device is not synchronized with a clock of the user plane function network element. Consequently, the residence time of the gPTP synchronization packet is inaccurate. Therefore, when the clock of the access network device that provides timing for the terminal device is not synchronized with the clock of the user plane function network element, how to ensure clock synchronization between the terminal device and the user plane function network element becomes a to-be-resolved problem.

### SUMMARY

Embodiments of this application provide a clock synchronization assurance method and an apparatus, to ensure clock synchronization between a terminal device and a user plane function network element when a clock of an access network device that provides timing for the terminal device is not synchronized with a clock of the user plane function network element.

According to a first aspect, an embodiment of this application provides a clock synchronization assurance method. The method may be performed by a clock management network element, or may be performed by a component (such as a processor, a chip, or a chip system) of the clock management network element, or may be implemented by a logical module or software that can implement all or some functions of the clock management network element. The method includes: A clock management network element receives a generalized precision time protocol (generalized precision time protocol, gPTP) clock synchronization request from an application function network element, where the gPTP clock synchronization request includes a clock synchronization parameter, and the clock management network element obtains, from the clock synchronization parameter, an identifier of a target user plane function network element and an identifier of a target terminal device that transmit a gPTP synchronization packet during TSN clock synchronization; the clock management network element obtains a clock offset between the target user plane function network element and a target access network device when a clock of a target user plane function network element is not synchronized with a clock of the target terminal device, where the target access network device is an access network device providing timing for the target terminal device; and the clock management network element sends the clock offset to the target user plane function network element, where the clock offset is used by the target user plane function network element for clock synchronization with the target terminal device; or the clock management network element sends the clock offset to the target terminal device, where the clock offset is used by the target terminal device for clock synchronization with the user plane function network element.

According to the foregoing method, when a clock of the target access network device that provides timing for the target terminal device is not synchronized with the clock of the target user plane function network element, and consequently, the clock of the target terminal device is not synchronized with the clock of the target user plane function network element, the clock management network element may obtain the clock offset between the target user plane function network element and the target access network device, and indicate the clock offset to the target terminal device or the target user plane network element, to implement clock synchronization between the target terminal device and the target user plane network element, thereby supporting TSN clock synchronization.

In a possible design, that the clock management network element obtains a clock offset between the target user plane function network element and a target access network device includes: The clock management network element sends a first clock offset measurement indication to the target user plane function network element, where the first clock offset measurement indication includes an identifier of the target access network device, and indicates the target user plane function network element to initiate measurement of the clock offset between the target user plane function network element and the target access network device; and the clock management network element receives a first clock offset measurement indication response from the target user plane function network element, where the first clock offset measurement indication includes the clock offset between the target user plane function network element and the target access network device.

In the foregoing design, the clock management network element may indicate the target user plane function network element to initiate the measurement of the clock offset relative to the target access network device, for example, initiate a round trip time (round trip time, RTT) operation, to obtain the clock offset between the target user plane function network element and the target access network device. This is simple and convenient to implement, and can accurately determine the clock offset, helping implement clock synchronization of the target terminal device or the target user plane network element.

In a possible design, when the target user plane function network element uses a plurality of clocks, the first clock offset measurement indication further includes an identifier of a target clock, and the first clock offset measurement indication response further includes the identifier of the target clock. The target clock is a clock that is determined by the clock management network element from the plurality of clocks and that is used by the target user plane function network element to perform clock synchronization with the target access network device or the target terminal device.

In the foregoing design, when the target user plane function network element uses the plurality of clocks, the clock used by the target user plane function network element to perform clock synchronization with the target access network device or the target terminal device is specified, so that when the target user plane function network element works in a plurality of clock domains, clock synchronization between the target terminal device and the target user plane function network element can be supported.

In a possible design, that the clock management network element obtains a clock offset between the target user plane function network element and a target access network device includes: The clock management network element sends a second clock offset measurement indication to the target access network device, where the second clock offset measurement indication includes the identifier of the target user plane function network element, and indicates the target access network device to initiate measurement of the clock offset between the target user plane function network element and the target access network device; and the clock management network element receives a second clock offset measurement indication response from the target access network device, where the second clock offset measurement indication response includes the clock offset between the target user plane function network element and the target access network device.

In the foregoing design, the clock management network element may indicate the target access network device to initiate the measurement of the clock offset relative to the target user plane function network element, for example, initiate an RTT operation, to obtain the clock offset between the target user plane function network element and the target access network device. This is simple and convenient to implement, and can accurately determine the clock offset, helping implement clock synchronization of the target terminal device or the target user plane network element.

In a possible design, when the target user plane function network element uses a plurality of clocks, the second clock offset measurement indication further includes an identifier of a target clock, and the second clock offset measurement indication response further includes the identifier of the target clock. The target clock is a clock that is determined by the clock management network element from the plurality of clocks and that is used by the user plane function network element to perform clock synchronization with the target access network device or the target terminal device.

Optionally, the method further includes: The clock management network element sends a second clock offset measurement reply indication to the target user plane function network element, where the second clock offset measurement reply indication includes the identifier of the target clock and an identifier of the target access network device, and indicates the target user plane function network element to respond, by using the target clock, to the measurement of the clock offset that is initiated by the target access network device.

**In** the foregoing design, when the target user plane function network element uses the plurality of clocks, the clock used by the target user plane function network element to perform clock synchronization with the target access network device or the target terminal device is specified, so that when the target user plane function network element works in a plurality of clock domains, clock synchronization between the target terminal device and the target user plane function network element can be supported.

**In** a possible design, that the clock management network element obtains a clock offset between the target user plane function network element and a target access network device includes: The clock management network element obtains a clock attribute of the clock of the target user plane function network element and a clock attribute of a clock of a target access network device; and the clock management network element determines the clock offset between the target user plane function network element and the target access network device based on the clock attribute of the clock of the target user plane function network element and the clock attribute of the clock of the target access network device.

**In** the foregoing design, the clock management network element may maintain clock information of the target user plane function network element, the target access network device, and the like, and may determine the clock offset between the target user plane function network element and the target access network device based on the clock attribute of the clock of the target user plane function network element and the clock attribute of the clock of the target access network device clock (for example, an offset from a specified reference clock with coordinated universal time (universal time coordinated, UTC) or the like), so that signaling overheads can be reduced.

In a possible design, the clock management network element determines, when at least one of the following is satisfied, that a clock used by the target user plane function network element is not synchronized with a clock used by the target terminal device: The clock management network element receives a clock switching notification from the target user plane function network element; the clock management network element receives a clock switching notification from the target access network device; the clock management network element receives a clock switching notification that is from a network management network element and that indicates that the clock of the target user plane function network element or a clock of the target access network device is switched; the clock management network element receives a clock asynchronization notification from the target terminal device, where the clock asynchronization notification indicates that the clock of the target terminal device is not synchronized with the clock of the target user plane function network element; or the clock management network element receives a clock asynchronization notification from the target user plane function network element, where the clock asynchronization notification indicates that the clock of the target user plane function network element is not synchronized with the clock of the target terminal device.

According to a second aspect, an embodiment of this application provides a clock synchronization assurance method. The method may be performed by a clock management network element, or may be performed by a component (such as a processor, a chip, or a chip system) of the clock management network element, or may be implemented by a logical module or software that can implement all or some functions of the clock management network element. The method includes: A clock management network element receives a gPTP clock synchronization request from an application function network element, where the gPTP clock synchronization request includes a clock synchronization parameter, and the clock management network element obtains, from the clock synchronization parameter, an identifier of a target user plane function network element and an identifier of a target terminal device that transmit a gPTP synchronization packet during TSN clock synchronization, and a gPTP clock synchronization error budget; the clock management network element may use a default configured gPTP clock synchronization error budget if there is no gPTP clock synchronization error budget in the clock synchronization parameter; the clock management network element determines, based on the clock offset between the target user plane function network element and the target access network device, the gPTP clock synchronization error budget, and an existing available timing error budget of the target access network device for the target terminal device, whether a clock synchronization requirement is met, where the target access network device is an access network device providing timing for the target terminal device, if the gPTP clock synchronization error budget is large, even if a clock offset caused by clock asynchronization between the target user plane function network element and the target access network device, the timing error budget of the access network device for the target terminal device, and an offset between a core network and a device side during implementation of gPTP clock synchronization are still within the required gPTP clock synchronization error budget, the clock synchronization management network element performs gPTP clock synchronization according to an existing method, or if the gPTP clock synchronization error budget is small, and the clock offset caused by clock asynchronization between the target user plane function network element and the target access network device, the timing error budget of the access network device for the target terminal device, and an offset between a core network and a device side during implementation of gPTP clock synchronization exceed the required gPTP clock synchronization error budget, the clock management network element may further update the available timing error budget of the target access network device for the target terminal device; and the clock management network element sends the available timing error budget to the target access network device when the available timing error budget is within a timing error budget range supported by the target access network device, where the available timing error budget is used by the target access network device to provide timing for the terminal device. In a possible implementation, when the target access network device sends an NG setup request (NG setup request), an available timing error budget supported by the target access network device is reported to the clock management network element, or reported to an access and management network element, and the clock management network element queries the access and management network element or the clock management network element notifies the access and management network element, where NG represents an interface between an access network and a core network.

Optionally, the method further includes: The clock management network element sends a clock synchronization request failure notification to the application function network element when the available timing error budget is not within the timing error budget range supported by the target access network device, or the application function network element requires internal clock synchronization in a 5G communication system, or the 5G communication system cannot meet the gPTP clock synchronization error budget, where the clock synchronization request failure notification is for notifying that the requested gPTP clock synchronization fails, that is, TSN clock synchronization fails.

According to the foregoing method, when a clock of the target access network device that provides timing for the target terminal device is not synchronized with the clock of the target user plane function network element, and consequently, the clock of the target terminal device is not synchronized with the clock of the target user plane function network element, the clock management network element may flexibly adjust an available timing error budget of an air interface based on a requirement of the gPTP clock synchronization error budget, so that the target user plane function network element and the target terminal device meet a clock synchronization requirement, thereby supporting TSN clock synchronization.

According to a third aspect, an embodiment of this application provides a clock synchronization assurance method. The method may be performed by a clock management network element, or may be performed by a component (such as a processor, a chip, or a chip system) of the clock management network element, or may be implemented by a logical module or software that can implement all or some functions of the clock management network element. The method includes: A clock management network element determines that a clock of a target user plane function network element is not synchronized with a clock of a target terminal device; and the clock management network element sends a first timing indication to a target access network device, and sends a first multi-domain clock indication to the target user plane function network element, where the first timing indication includes an identifier of the target user plane function network element and indicates the target access network device to provide timing for the target user plane function network element, and the first multi-domain clock indication includes an identifier of the target access network device and an identifier of the target terminal device and indicates the target user plane function network element to receive the timing from the target access network device, and perform clock synchronization with the target terminal device by using a clock from the target access network device; or the clock management network element sends a second timing indication to the target user plane function network element, and sends a second multi-domain clock indication to a target access network device, where the second timing indication includes an identifier of the target access network device and indicates the target user plane function network element to provide timing for the target access network device, and the second multi-domain clock indication includes an identifier of the target user plane function network element and an identifier of the target terminal device and indicates the target access network device to receive the timing from the target user plane function network element, and provide timing for the target terminal device by using a clock from the target user plane function network element, where the target access network device is an access network device providing timing for the target terminal device.

According to the foregoing method, when a clock of the target access network device that provides timing for the target terminal device is not synchronized with the clock of the target user plane function network element, and consequently, the clock of the target terminal device is not synchronized with the clock of the target user plane function network element, the clock management network element may indicate the target access network device or the target user plane function network element to accept timing from each other, to implement clock synchronization between the target terminal device and the target user plane network element, thereby supporting TSN clock synchronization.

In a possible design, the clock management network element determines, when at least one of the following is satisfied, that the clock of the target user plane function network element is not synchronized with the clock of the target terminal device: The clock management network element receives a clock switching notification from the target user plane function network element; the clock management network element receives a clock switching notification from the target access network device; the clock management network element receives a clock switching notification that is from a network management network element and that indicates that the clock of the target user plane function network element or the clock of the target access network device is switched; the clock management network element receives a clock asynchronization notification from the target terminal device, where the clock asynchronization notification indicates that the clock of the target terminal device is not synchronized with the clock of the target user plane function network element; or the clock management network element receives a clock asynchronization notification from the target user plane function network element, where the clock asynchronization notification indicates that the clock of the target user plane function network element is not synchronized with the clock of the target terminal device.

According to a fourth aspect, an embodiment of this application provides a communication apparatus. The apparatus has a function of implementing the method in the first aspect to the third aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the first aspect to the third aspect.

In a possible design, the apparatus may be a clock management network element.

According to a fifth aspect, an embodiment of this application provides a communication apparatus. The communication apparatus includes an interface circuit and a processor, and the processor is coupled to the interface circuit. The processor is configured to implement the method in the first aspect to the third aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required by the processor to run instructions, or store data generated after the processor runs instructions. The memory may be a physically independent unit, or may be coupled to the processor, or the processor includes the memory.

According to a sixth aspect, an embodiment of this application provides a computer-readable storage medium. The storage medium stores a computer program or instructions. When the computer program or the instructions are executed by a processor, the method in the first aspect to the third aspect can be implemented.

According to a seventh aspect, an embodiment of this application further provides a computer program product, including a computer program or instructions. When the computer program or the instructions are executed, the method in the first aspect to the third aspect can be implemented.

According to an eighth aspect, an embodiment of this application further provides a chip. The chip is coupled to a memory, and is configured to read and execute a program or indications stored in the memory, to implement the method in the first aspect to the third aspect.

For technical effects that can be achieved in the fourth aspect to the eighth aspect, refer to the technical effects that can be achieved in the first aspect to the third aspect. Details are not described herein again.

### BRIEF DESCRIPTION OF DRAWINGS

FIG. 1A is a diagram of a network architecture based on a service-based architecture in a 5G communication system;
FIG. 1B is a diagram of a network architecture of a 5G communication system based on a point-to-point interface;
FIG. 2 is a diagram of a logical architecture in which a 5G communication system accesses a TSN system;
FIG. 3 is a first diagram of a clock synchronization assurance method according to an embodiment of this application;
FIG. 4 is a diagram of a round trip time operation according to an embodiment of this application;
FIG. 5 is a second diagram of a clock synchronization assurance method according to an embodiment of this application;
FIG. 6 is a third diagram of a clock synchronization assurance method according to an embodiment of this application;
FIG. 7 is a fourth diagram of a clock synchronization assurance method according to an embodiment of this application;
FIG. 8 is a fifth diagram of a clock synchronization assurance method according to an embodiment of this application;
FIG. 9 is a sixth diagram of a clock synchronization assurance method according to an embodiment of this application;
FIG. 10 is a first diagram of a communication apparatus according to an embodiment of this application; and
FIG. 11 is a second diagram of a communication apparatus according to an embodiment of this application.

### DESCRIPTION OF EMBODIMENTS

The technical solutions in embodiments of this application may be applied to a 5G communication system, or may be applied to a communication system evolved after 5G, such as a 6th generation (6th generation, 6G) communication system. The following describes some network architectures to which this application is applicable. In the following description, an example in which a terminal device is a user equipment (user equipment, UE) is used.

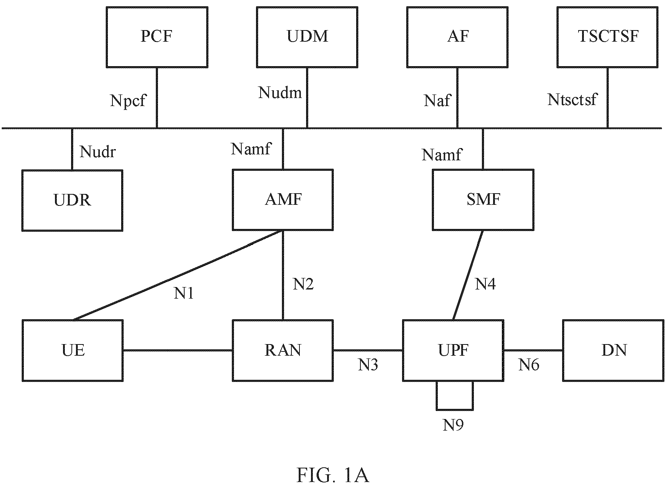

FIG. 1A is a diagram of a network architecture based on a service-based architecture in a 5G communication system. The network architecture shown in FIG. 1A may include a data network (data network, DN) and an operator network. The following briefly describes functions of some network elements in the network architecture.

The operator network includes one or more of the following network elements: a unified data management (unified data management, UDM) network element, a unified repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and an access network (access network, AN) device (a radio access network (radio access network, RAN) device is used as an example in the figure), a time sensitive communication and time synchronization function (time sensitive communication and time synchronization function, TSCTSF) network element, an authentication server function (authentication server function, AUSF) network element (not shown in the figure), a network storage function (network repository function, NRF) network element (not shown in the figure), a network exposure function (network exposure function, NEF) network element (not shown in the figure), and the like. In the operator network, a network element or device other than the access network device may be referred to as a core network network element or a core network device.

The access network device includes a wired access network device and a radio access network device. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the access network device are not limited in embodiments of this application.

A terminal device communicating with the RAN includes a terminal, a user equipment (user equipment, UE), a mobile station, a mobile terminal, and the like. In the figure, an example in which the terminal device is the UE is used. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The access network device and the terminal device may be located in fixed locations, or may be movable. The access network device and the terminal device may be deployed terrestrially, including an indoor device or an outdoor device, a handheld device, or a vehicle-mounted device; or may be deployed on the water; or may be deployed on an airplane, a balloon, and an artificial satellite in the air. Application scenarios of the access network device and the terminal device are not limited in embodiments of this application.

The access and mobility management function network element is a control plane network element provided by the operator network, and is responsible for access control and mobility management for accessing the operator network by the terminal device, for example, including functions such as mobility status management, allocation of a temporary user identity, and user authentication and authorization. In 5G, the access and mobility management function network element may be an AMF network element. In future communication, for example, in the 6th generation (the 6th generation, 6G), the access and mobility management function network element may still be an AMF network element, or may have another name. This is not limited in this application.

The session management function network element is a control plane network element provided by the operator network, and is responsible for managing a protocol data unit (protocol data unit, PDU) session of the terminal device. The PDU session is a channel used for transmitting a PDU, and the terminal device needs to transmit the PDU to the DN through the PDU session. The session management function network element is responsible for, for example, establishing, maintaining, and deleting the PDU session. The session management function includes session-related functions such as session management (for example, session establishment, modification, and release, including tunnel maintenance between a user plane function network element and the access network device), selection and control of the user plane function network element, service and session continuity (service and session continuity, SSC) mode selection, and roaming. In 5G, the session management function network element may be the SMF network element. In future communication such as 6G, the session management function network element may still be the SMF network element, or may have another name. This is not limited in this application.

The user plane function network element is a gateway provided by an operator, and is a gateway for communication between the operator network and the DN. The user plane function network element includes functions related to a user plane, for example, data packet routing and transmission, packet detection, service usage reporting, quality of service (Quality of Service, QoS) processing, lawful interception, uplink packet detection, and downlink packet storage. In 5G, the user plane function network element may be a UPF network element. In future communication such as 6G, the user plane function network element may still be a UPF network element, or may have another name. This is not limited in this application.

The unified data management network element is a control plane network element provided by an operator, and is responsible for storing information such as a subscriber permanent identifier (subscriber permanent identifier, SUPI), a credential (credential), security context (security context), and subscription data of a subscriber in the operator network. The information stored in the unified data management network element may be used for authentication and authorization for accessing the operator network by the terminal device. In 5G, the unified data management network element may be a UDM network element. In future communication such as 6G, the unified data management network element may still be a UDM network element, or may have another name. This is not limited in this application.

The unified data repository network element is a control plane network element provided by an operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

The network exposure function network element is a control plane network element provided by an operator. The network exposure function network element securely exposes an external interface of an operator network to a third party. When the session management network element needs to communicate with a third-party network element, the network exposure function network element may be used as a relay for communication between the session management network element and the third-party network element. When the network exposure function network element serves as the relay, the network exposure function network element may translate identification information of the subscriber and identification information of the third-party network element. For example, when sending the SUPI of the subscriber from the operator network to the third party, the network exposure function network element may translate the SUPI into an external identity corresponding to the SUPI. On the contrary, when the network exposure function network element sends an external ID (an ID of the third-party network element) to the operator network, the network exposure function network element may translate the external ID into the SUPI. In 5G, the network exposure function network element may be the NEF network element. In future communication such as 6G, the network exposure function network element may still be the NEF network element, or may have another name. This is not limited in this application.

The application function network element is configured to transmit a requirement of an application side to a network side, for example, a QoS requirement or a user status event subscription. The application function network element may be a third-party functional entity, or may be an application server deployed by an operator. In 5G, the application function network element may be the AF network element. In future communication such as 6G, the application function network element may still be the AF network element, or may have another name. This is not limited in this application. The AF network element includes a TSN AF network element.

The policy control function network element is a control plane function provided by an operator, and is configured to provide a policy of the PDU session for the session management function network element. The policy may include a charging-related policy, a QoS-related policy, an authorization-related policy, and the like. In 5G, the policy control function network element may be the PCF network element. In future communication network such as 6G, the policy control function network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

A clock management network element may be configured to manage clock information of one or more clock sources in a 5G network, and may provide the clock information of the clock sources externally through a port of the clock management network element, for example, directly or indirectly provide the clock information for the terminal device, the access network device, the core network device, or a third-party application function network element. The clock information represents time, a moment, or a time point of a clock. The clock management network element may further select a corresponding timing network element based on a timing request of a timing requester. The timing network element may be, for example, the UPF network element or the access network device, or may be the clock management network element. Then, the clock management network element indicates the timing network element to provide a timing service for the timing requester. In 5G, the clock management network element may be a TSCTSF network element defined by the 3rd generation partnership project (3rd generation partnership project, 3GPP). In future communication such as 6G, the clock management network element may still be the TSCTSF network element or have another name. This is not limited in this application.

The DN is a network outside an operator network. The operator network may access a plurality of DNs, and a plurality of services may be deployed on the DN, to provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Npcf, Nudr, Nudm, Naf, Namf, Nsmf, and Ntsctsf in FIG. 1A are service-based interfaces respectively provided by the foregoing PCF network element, the foregoing UDR network element, the foregoing UDM network element, the foregoing AF network element, the foregoing AMF network element, the foregoing SMF network element, and the foregoing TSCTSF network element, and are for invoking corresponding service-based operations. N1, N2, N3, N4, and N6 are interface sequence numbers. Meanings of these interface sequence numbers are as follows:
(1) N1 is an interface between the AMF network element and the UE, and may be configured to transmit non access stratum (non access stratum, NAS) signaling (for example, including a QoS rule from the AMF network element) to the UE, and the like.
(2) N2 is an interface between the AMF network element and the radio access network device, and may be configured to transmit radio bearer control information from a core network side to the radio access network device, and the like.
(3) N3 is an interface between the radio access network device and the UPF network element, and is mainly configured to transmit uplink user plane data and/or downlink user plane data between the radio access network device and the UPF network element.
(4) N4 is an interface between the SMF network element and the UPF network element, and may be configured to transmit information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transmit an uplink user data flow and/or a downlink user data flow between the UPF network element and the DN.

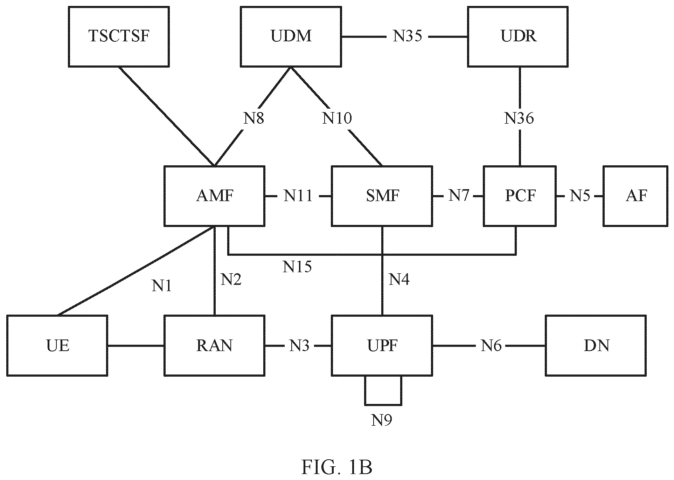

FIG. 1B is a diagram of a network architecture of a 5G communication system based on a point-to-point interface. For descriptions of functions of network elements, refer to the descriptions of the functions of the corresponding network elements in FIG. 1A. Details are not described again. A main difference between FIG. 1B and FIG. 1A lies in that the interface between control plane network elements in FIG. 1A is a service-based interface, and an interface between control plane network elements in FIG. 1B is a point-to-point interface.

In the architecture shown in FIG. 1B, names and functions of the interfaces between the network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a protocol data unit (protocol data unit, PDU) session granularity control policy and a service data flow granularity control policy.
(4) N8 is an interface between the AMF network element and the UDM network element, and may be used by the AMF network element to obtain subscription data and authentication data that are related to access and mobility management from the UDM network element, and used by the AMF network element to register information related to terminal device mobility management with the UDM network element, and the like.
(5) N9 is a user plane interface between UPF network elements, and is configured to transmit an uplink user data flow and/or a downlink user data flow between the UPF network elements.
(6) N10 is an interface between the SMF network element and the UDM network element, and may be used by the SMF network element to obtain subscription data related to session management from the UDM network element, and used by the SMF network element to register information related to a terminal device session with the UDM network element, and the like.
(7) N11 is an interface between the SMF network element and the AMF network element, and may be configured to: transmit PDU session tunnel information between a radio access network device and the UPF network element, transmit a control message to be sent to a terminal device, transmit radio resource control information to be sent to the radio access network device, and the like.
(8) N15 is an interface between the PCF network element and the AMF network element, and may be configured to deliver a terminal device policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in this embodiment of this application.

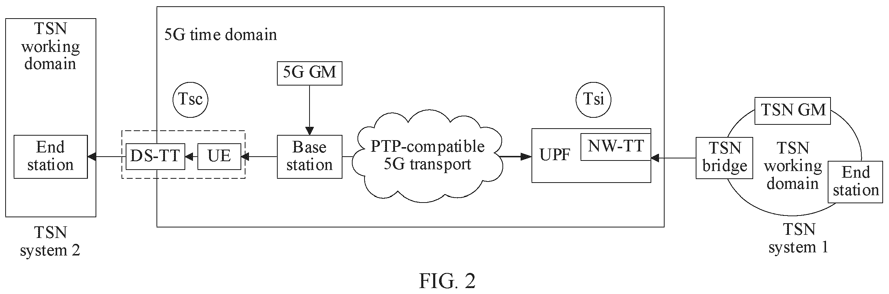

A logical architecture diagram of accessing a TSN system by using a 5G communication system may be shown in FIG. 2. FIG. 2 merely shows some network elements (that is, a base station, a UE, and a UPF) in a 5G architecture. In FIG. 2, network elements such as the base station, the UE, and the UPF, and an NW-TT and a DS-TT are used as a logical TSN bridge (which is referred to as a 5G TSN bridge) to connect a TSN system 1 and a TSN system 2.

The NW-TT is configured to connect to the network-side TSN system 1, and is usually a functional module in the UPF network element, and is configured to introduce TSN data to a 5G network. Because the NW-TT receives a gPTP synchronization packet from a TSN system, the NW-TT may be understood as a slave (slave) interface. The NW-TT needs to complete delay and frequency offset measurement between the NW-TT and the TSN bridge (bridge), and a function, for example, adding an ingress timestamp Tsi to the GPTP synchronization packet.

The DS-TT is configured to connect to the terminal device-side TSN system 2, may be a functional module in the terminal device, or may be connected to the terminal device in a wired or wireless manner, and is configured to input TSN data to a TSN network. Because the DS-TT needs to send the gPTP synchronization packet to the TSN network, the DS-TT may be understood as a master (master) interface. The DS-TT needs to work with an end station (end station) to complete delay and frequency offset measurement, add an egress timestamp Tsc to the gPTP synchronization packet received from the terminal device, and then calculate an internal forwarding delay.

The TSN system (including the network-side TAN system 1 and the device-side TSN system 2) works in a TSN working domain (TSN working domain). In the TSN working domain, a TSN GM indicates a clock source of the TSN system. The TSN GM may be a factory-defined clock source and does not need to maintain consistent with time like a global positioning system (global positioning system, GPS) or coordinated universal time (coordinated universal time, UTC). The TSN bridge (bridge) is mainly configured to send a gPTP synchronization packet to a 5G time domain (5G time domain), so that the terminal device (or an end station corresponding to the terminal device) in the 5G communication system can be synchronized with TSN system time.

The 5G time domain (5G time domain) in which the 5G communication system works is a precise time protocol (precise time protocol, PTP) node for the TSN system, that is, PTP-compatible 5G transport (PTP-compatible 5G transport). Therefore, devices in the 5G time domain need to work in a same clock. A 5G GM indicates a clock source of the 5G communication system. Generally, GPS is used as the clock source.

Specifically, during TSN system time synchronization, the NW-TT in the UPF network element receives the gPTP synchronization packet of the TSN system from the TSN bridge, adds the ingress timestamp Tsi to the gPTP synchronization packet based on 5G time, and then sends the gPTP synchronization packet to the terminal device by using an access network device (for example, the base station) in the 5G communication system. The DS-TT in the terminal device adds the egress timestamp Tsc to the gPTP synchronization packet based on the 5G time, and determines, based on the ingress timestamp Tsi and the egress timestamp Tsc, a forwarding delay from the UPF network element to the terminal device, to implement time synchronization between the terminal device and the TSN network based on the forwarding delay and TSN clock information recorded in the gPTP synchronization packet.

Optionally, an example in which an ingress is the NW-TT and an egress is the DS-TT is used, the NW-TT may further add a link delay (link delay) of a TSN node (node) to a correction field (correction field) of the gPTP synchronization packet, where the link delay indicates a delay from sending the gPTP synchronization packet by the TSN system 1 to arriving at the NW-TT by the gPTP synchronization packet. In addition, the NW-TT may further calculate a new cumulative rate ratio (cumulative rateRatio) to replace an original TSN node rate ratio (rateRatio) recorded in the gPTP synchronization packet. The cumulative rateRatio may be understood as a conversion ratio between 5G GM time and TSN GM time. When calculating residence time, the DS-TT may convert the residence time into the TSN GM time based on the cumulative rateRatio and add time to the correction field. The terminal device or the end station that receives the gPTP synchronization packet may determine accurate TSN clock information based on the TSN clock information in the gPTP synchronization packet, the converted residence time, and the link delay.

It can be learned that time synchronization between the terminal device and the TSN depends on time synchronization in the 5G communication system. However, when a 5G clock is abnormal/switched, a clock of an access network device that provides timing for the terminal device is not synchronized with a clock of the user plane function network element. In this case, the residence time of the obtained gPTP synchronization packet is inaccurate, and the TSN clock synchronization cannot be supported. Therefore, when the clock of the access network device that provides timing for the terminal device is not synchronized with the clock of the user plane function network element, how to ensure clock synchronization between the terminal device and the user plane function network element becomes a to-be-resolved problem. This application is intended to provide a clock synchronization assurance method, to ensure clock synchronization between a terminal device and a user plane function network element when a clock of an access network device that provides timing for the terminal device is not synchronized with a clock of the user plane function network element.

The following describes embodiments of this application in detail with reference to the accompanying drawings by using an example in which a terminal device is a UE, an access network device is a RAN device, and a clock management network element, a user plane function network element, an application function network element, and the like are a TSCTSF network element, a UPF network element, an AF network element, and the like in 5G.

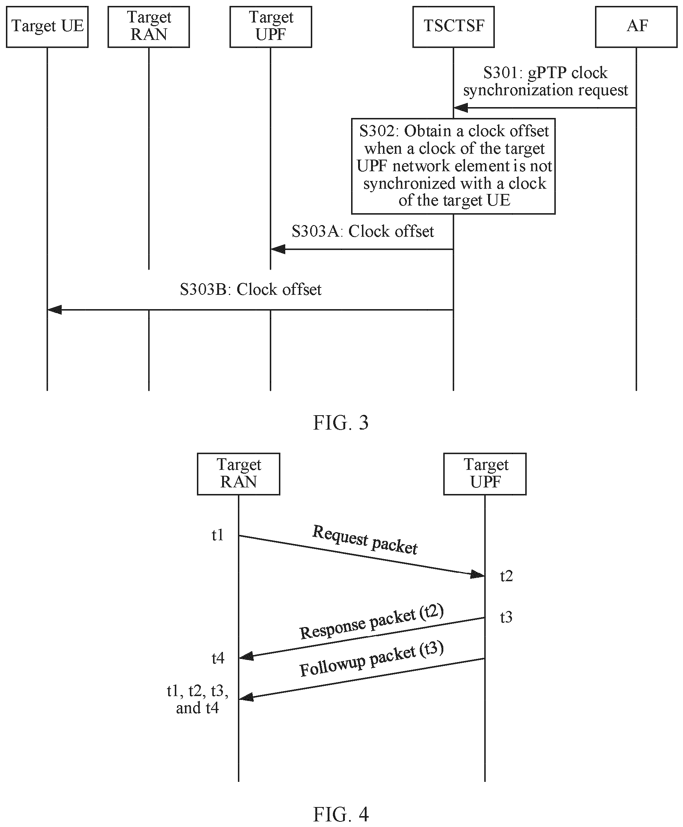

FIG. 3 is a clock synchronization assurance method according to an embodiment of this application. The method includes the following steps.

S301: A TSCTSF network element receives a gPTP clock synchronization request from an AF network element.

The gPTP clock synchronization request includes a clock synchronization parameter, and the TSCTSF network element may obtain, from the clock synchronization parameter, an identifier of a target UPF network element and an identifier of a target UE that transmit a gPTP synchronization packet. For example, the identifier of the target UE and the identifier of the target UPF network element are respectively an identity document (identity document, ID) of the target UE, an ID of the target UPF network element, and the like.

Specifically, the AF network element may determine, based on a network-side TSN system and a device-side TSN system that need to perform gPTP clock synchronization, a connection status between the network-side TSN system and the UPF network element, and a connection status between the device-side TSN system and the UE, the target UE and the target UPF network element that are connected to the network-side TSN system and the device-side TSN system that perform the gPTP clock synchronization. After determining the target UE and the target UPF network element, the AF network element may send the gPTP clock synchronization request to the TSCTSF network element, to activate a timing exposure capability of a 5G network.

After receiving the gPTP clock synchronization request from the AF network element, the TSCTSF network element determines whether a clock of the target UPF network element is synchronized with a clock of the target UE.

Specifically, the TSCTSF network element may maintain a clock attribute of a clock of each RAN device managed by the TSCTSF network element and a clock attribute of a clock of each UPF network element managed by the TSCTSF network element. A clock attribute of a clock may include an identifier of the clock, a clock class (clockclass) of the clock, and clock quality information such as a clock offset (offsetScaledLogVariance) from a specified reference clock, and clock accuracy (ClockAccuracy). The clock attribute of the clock of the RAN device managed by the TSCTSF network element and the clock attribute of the clock of the UPF network element managed by the TSCTSF network element may be reported, when the RAN device and the UPF network element establish connections to the TSCTSF network element, or may be reported by the RAN device, the UPF network element, or the like based on a specified periodicity or a specified policy. When the TSCTSF network element detects that an identifier of a clock of a target RAN device that provides timing for the target UE is different from an identifier of the clock of the target UPF network element, the TSCTSF network element may determine that a clock used by the target UPF network element is different from a clock used by the target UE, and that the clock of the target UPF network element is not synchronized with the clock of the target UE. When the TSCTSF network element detects that an identifier of a clock of a target RAN device that provides timing for the target UE is the same as an identifier of the clock of the target UPF network element, the TSCTSF network element determines that the clock of the target UPF network element is synchronized with the clock of the target UE.

In some implementations, the target UE or the target UPF network element may further send a clock asynchronization notification including the identifier of the target UE and the identifier of the target UPF network element to the TSCTSF network element when detecting that, in the transmitted gPTP synchronization packet, an identifier of a clock recorded in a timestamp added by the target UE is different from an identifier of a clock recorded in a timestamp added by the target UPF network element. When receiving the clock asynchronization notification sent by the target UE or the target UPF network element, the TSCTSF network element may also determine accordingly that a clock of the target UE is not synchronized with a clock of the target UPF network element. The clock asynchronization notification sent by the target UE may further include an identifier of a gPTP clock synchronization instance, or port status information of the target UE, for example, a port management information container (port management information container, PMIC). The clock asynchronization notification sent by the target UPF network element may further include an identifier of a gPTP clock synchronization instance, or port status information of the target UPF network element, for example, a user plane management information container (user plane management information container, UMIC). When receiving the foregoing information, a clock management network element may further learn of a change of a clock synchronization status of the target UE or the target UPF.

In addition, for the target UE and the target UPF network element whose clocks are determined as synchronized, when the TSCTSF network element receives a clock switching notification after clock switching that is sent by the target RAN device that provides timing for the target UE or the target UPF network element, or receives a clock switching notification that indicates that the clock of the target RAN device or the clock of the target UPF network element is switched and that is sent by a network management network element to the TSCTSF network element after detecting that the clock of the target RAN device or the clock of the target UPF network element is switched, the TSCTSF network element may also determine that the clock of the target RAN device is not synchronized with the clock of the target UPF network element, and that the clock of the target UE that receives the timing provided by the target RAN device is not synchronized with the clock of the target UPF network element.

In addition, when receiving the clock attribute of the target RAN device or the clock attribute of the target UPF network element, the TSCTSF network element may also determine whether the clock of the target RAN device is synchronized with the clock of the target UPF network element. For example, the clock of the target RAN device has been synchronized with the clock of the target UPF network element before, but when a clock state of the target RAN device is in a holdover (holdover) state, the clock of the target RAN device may be still not synchronized with the clock of the target UPF network element. In this case, the clock management network element may also determine that the clock of the target RAN device is not synchronized with the clock of the target UPF network element, and determine that the clock of the target UE for which the target RAN device provides timing is not synchronized with the clock of the target UPF network element.

S302: The TSCTSF network element obtains a clock offset between the target UPF network element and the target RAN device when the clock of the target UPF network element is not synchronized with the clock of the target UE, where the target RAN device is a timing RAN device of the target UE.

In a possible implementation, the TSCTSF network element may determine the clock offset between the target UPF network element and the target RAN device based on the clock attribute of the clock of the target UPF network element and the clock attribute of the clock of the target UPF network element. In an example, a clock used by the target UPF network element is a 5G GM1, a clock used by the target UPF network element is a 5G GM2, and a clock offset between the 5G GM1 and a specified reference clock and a clock offset between the 5G GM2 and the specified reference clock are both a clock offset from UTC. The TSCTSF network element may determine the clock offset between the target UPF network element and the target RAN device based on the clock offset between the 5G GM1 and the UTC and the clock offset between the 5G GM2 and the UTC.

It should be understood that, the clock offset between the target UPF network element and the target RAN device may be described as a clock offset of the target RAN device relative to the target UPF network element and a clock offset of the target UPF network element relative to the target RAN device. In an example, at a moment, if a moment of the clock 5G GM1 of the target UPF network element is 00:00:01 and a moment of the clock 5G GM2 of the target RAN device is 00:00:00, the clock offset of the target UPF network element relative to the target RAN device is 00:00:00-00:00:01 (the 5G GM2-the 5G GM1), and is -1s; and the clock offset of the target RAN device relative to the target UPF network element is 00:00:01-00:00:00 (the 5G GM1-the 5G GM2), and is 1s. In subsequent descriptions of embodiments of this application, the clock offset between the target UPF network element and the target RAN device is the clock offset of the target RAN device relative to the target UPF network element for description.

In some other implementations, the TSCTSF network element may further indicate the target UPF network element and the target RAN device to perform a round trip time (round trip time, RTT) operation, to obtain the clock offset between the target UPF network element and the target RAN device.

FIG. 4 is a diagram of performing the RTT operation between the target RAN device and the target UPF network element according to an embodiment of this application.

Step 1: The target RAN device sends a request (request) packet to the target UPF network element at a moment t1, and records the moment t1 at which the request packet is sent.

Step 2: The target UPF network element receives the request packet at a moment t2, and adds a timestamp t2 to the request packet.

Step 3: The target UPF network element sends a response (response) packet at a moment t3, and records the moment t3 at which the response packet is sent, where the response packet carries the timestamp t2.

Step 4: The target RAN device receives the response packet at a moment t4, and adds a timestamp t4 to the response packet.

In addition, after sending the response packet, the target UPF network element further sends a followup (followup) packet to the target RAN device, and the followup packet carries the moment t3 at which the target UPF network element sends the response packet. In this case, the target RAN device obtains the moment t1 at which the request packet is sent, the moment t2 at which the target UPF network element receives the request packet, the moment t3 at which the target UPF network element sends the response packet, and the moment t4 at which the target RAN device receives the response packet. The target RAN device may determine the clock offset (offset) between the target RAN device and the target UPF network element based on [(t2-t1)-(t4-t3)]/2. The target RAN device may further calculate a delay (delay) between the target RAN device and the target UPF network element based on [(t2-t1)+(t4-t3)]/2.

In an example, the TSCTSF network element may send a first clock offset measurement indication to the target UPF network element. The first clock offset measurement indication includes the identifier of the target RAN device, and indicates the target UPF network element to initiate measurement of the clock offset between the target UPF network element and the target RAN device. After receiving the first clock offset measurement indication, the target UPF network element may initiate an RTT operation to the target RAN device, to measure the clock offset between the target UPF network element and the target RAN device. After completing the clock offset measurement, the target UPF network element may send a first clock offset measurement indication response to the TSCTSF network element, and include the clock offset obtained through measurement in the first clock offset measurement indication. Optionally, the target UPF network element may further include one or more of the identifier of the target UPF network element, the identifier of the target RAN device, the identifier of the clock of the target UPF network element, the identifier of the clock of the target RAN device, and the like in the first clock offset measurement indication, so that the TSCTSF network element determines the target UPF network element and/or the target RAN device corresponding to the clock offset, and the clock of the corresponding target UPF network element and/or the clock of the corresponding target RAN device that are carried in the first clock offset measurement.

Certainly, the TSCTSF network element may further send a second clock offset measurement indication to the target RAN device. The second clock offset measurement indication includes the identifier of the target UPF network element, and indicates the RAN device to initiate measurement of the clock offset between the target UPF network element and the target RAN device. The RAN device initiates the clock offset measurement, and returns, to the TSCTSF network element, a second clock offset response including the clock offset between the target RAN device and the target UPF network element.

In a possible implementation, the TSCTSF network element may alternatively periodically obtain clock offsets between different RAN devices and the UPF network element based on a specified periodicity. After receiving the gPTP clock synchronization request, the TSCTSF network element may directly use a latest obtained clock offset between the target RAN device and the target UPF. Optionally, if a difference between time at which the gPTP clock synchronization request is received and time at which the clock offset is obtained is greater than a specified threshold, the TSCTSF network element may further re-obtain the clock offset between the target RAN device and the target UPF.

The TSCTSF network element performs S303A or S303B.

S303A: The TSCTSF network element sends the clock offset to the target UPF network element, where the clock offset is used by the target UPF network element for clock synchronization with the target UE.

In a possible implementation, the TSCTSF network element may send the clock offset to the target UPF network element. When subsequently making a timestamp on a gPTP synchronization packet from the target UE or to be sent to the UE, the target UPF network element may correct the clock of the target UPF network element based on the clock offset.

For example, the clock offset is an offset. When an egress of the gPTP synchronization packet is on a target UE side, when the target UPF network element (for example, an NW-TT in the target UPF network element) adds an ingress timestamp to the gPTP synchronization packet to be sent to the target UE, the ingress timestamp changes from Tsi before correction to Tsi-offset. When receiving the gPTP synchronization packet, the target UE (for example, a DS-TT in the target UE) adds an egress timestamp Tse. Accurate residence time of the gPTP synchronization packet in a 5G bridge (that is, in a 5G communication system) can be obtained based on Tse-(Tsi-offset).

When the egress of the gPTP synchronization packet is on a target UPF network element side, the target UE adds an ingress timestamp Tsi to the gPTP synchronization packet to be sent to the target UPF network element. The target UPF network element receives the gPTP synchronization packet. When an egress timestamp is added to the gPTP synchronization packet, the egress timestamp changes from Tse before correction to Tse-offset. Accurate residence time of the gPTP synchronization packet in the 5G bridge can be obtained based on Tse-offset-Tsi.

S303B: The TSCTSF network element sends the clock offset to the target UE, where the clock offset is used for clock correction when the target UE performs clock synchronization with the UPF network element.

In another possible implementation, the TSCTSF network element may send the clock offset to the target UE, and when subsequently making a timestamp on the gPTP synchronization packet, the target UE network element may correct the clock of the target UE network element based on the clock offset. For example, the clock offset is still an offset. When an egress of the gPTP synchronization packet is on the target UE side, when the target UPF network element (for example, an NW-TT in the target UPF network element) adds an ingress timestamp to the gPTP synchronization packet, the ingress timestamp is Tsi. After receiving the gPTP synchronization packet, when the target UE (for example, a DS-TT in the target UE) adds an egress timestamp to the gPTP synchronization packet, the egress timestamp changes from Tse before correction to Tse+offset. Accurate residence time of the gPTP synchronization packet in the 5G bridge can be obtained based on Tse+offset-Tsi.

When the egress of the gPTP synchronization packet is on the target UPF network element side, when the target UE adds an ingress timestamp to the gPTP synchronization packet to be sent to the target UPF network element, the ingress timestamp changes from Tsi before correction to Tsi+offset. The target UPF network element receives the gPTP synchronization packet. When an egress timestamp is added to the gPTP synchronization packet, the egress timestamp is Tse. Accurate residence time of the gPTP synchronization packet in the 5G bridge can be obtained based on Tse-(Tsi+offset).

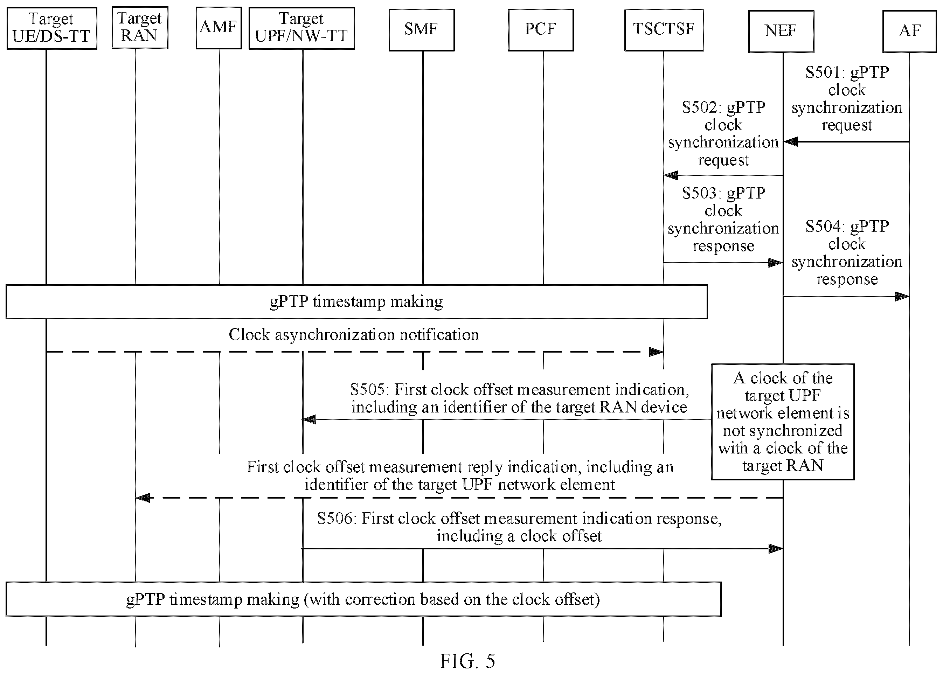

With reference to the network architectures in FIG. 1A and FIG. 1B, the following specifically describes the embodiment in FIG. 3 by using the following embodiment in FIG. 5.

S501: An AF network element sends a gPTP clock synchronization request to a NEF network element, where the gPTP clock synchronization request includes an identifier of a target UPF network element and an identifier of a target UE.

In a possible implementation, the gPTP clock synchronization request may further include a requirement for clock synchronization between the target UE and the target UPF, for example, whether clock synchronization (that is, same clocks) between the target UE and the target UPF is required.

Optionally, the AF network element may be a TSN AF network element.

Optionally, the gPTP synchronization request message is Nnef_TimeSynchronization_ASTICreate/Update/Deleterequest.

S502: The NEF network element sends a gPTP clock synchronization request to a TSCTSF network element.

After receiving the gPTP clock synchronization request from the AF network element, the NEF network element may perform authentication on the AF network element. After the authentication succeeds, the NEF network element sends the gPTP clock synchronization request to the TSCTSF network element. Content of the gPTP clock synchronization request is the same as content of the gPTP clock synchronization request in step 501.

Optionally, the gPTP clock synchronization request is Ntsetsf_TimeSynchronization_ASTICreate/Update/Deleterequest.

S503: The TSCTSF network element sends a gPTP clock synchronization response to the NEF network element.

S504: The NEF network element sends the gPTP clock synchronization response to the AF network element.

After receiving the gPTP clock synchronization request, the TSCTSF network element sends the gPTP clock synchronization response to the NEF network element. When receiving the gPTP clock synchronization response, the NEF network element forwards the gPTP clock synchronization response to the AF network element.

Optionally, the gPTP clock synchronization response may be Ntsetsf_TimeSynchronization_ASTICreate/Update/Deletereponse.

Optionally, if the gPTP clock synchronization request may further include a requirement for clock synchronization in a 5G network, or a requirement for clock synchronization between the target UE and the target UPF, if a clock of the target UE is not synchronized with a clock of the target UPF, the gPTP clock synchronization response further carries a notification indicating that the clock synchronization request fails, and the TSCTSF network element may change corresponding port information. For example, if a clock of a target RAN device is switched, the TSCTSF network element temporarily marks a DS-TT port on the target UE as a disabled (disabled) state. If the clock of the target UPF network element is switched, the TSCTSF network element temporarily marks an NW-TT port on the target UPF network element as a disabled state. After a clock of a target device whose clock is switched is synchronized or becomes normal, a corresponding port is marked as an enabled (enabled) state.

S505: The TSCTSF network element sends a first clock offset measurement indication to the target UPF network element when the clock of the target UPF network element is not synchronized with the clock of the target RAN.

The first clock offset measurement indication includes an identifier of the target RAN device, and indicates the target UPF network element to initiate measurement of a clock offset between the target UPF network element and the target RAN device, that is, indicates the target UPF network element to initiate an RTT operation for the target RAN device.

Optionally, the TSCTSF network element may further send a first clock offset measurement reply indication to the target RAN device. The first clock offset measurement reply indication includes the identifier of the target UPF network element, and indicates the target RAN device to respond to the clock offset measurement initiated by the target UPF, that is, indicates the target RAN device to respond to the RTT operation that is initiated by the target UPF network element.

In FIG. 5, for example, when detecting that, in the transmitted gPTP synchronization packet, an identifier of a clock recorded in a timestamp added by the target UE is different from an identifier of a clock recorded in a timestamp added by the target UPF network element, the target UE sends a clock asynchronization notification including the identifier of the target UE and the identifier of the target UPF network element to the TSCTSF network element, and when receiving the clock asynchronization notification sent by the target UE, the TSCTSF network element determines that the clock of the target UE is not synchronized with the clock of the target UPF network element. Optionally, the clock asynchronization notification may further carry the identifier of the target RAN device that provides timing for the target UE, so that the TSCTSF network element determines the target RAN device that provides timing for the target UE. The identifier of the target RAN device may be added by the target UE to the clock asynchronization notification, or may be added by an AMF network element that forwards the clock asynchronization notification.

S506: The TSCTSF network element receives a first clock offset measurement indication response from the target UPF network element, where the first clock offset measurement indication includes the clock offset between the target UPF network element and the target RAN device.

After obtaining the clock offset between the target UPF network element and the target RAN device, the TSCTSF network element may send the clock offset to the target UE or the target UPF network element for clock synchronize between the target UE and the target UPF network element. In other words, when the target UE or the target UPF network element that receives the clock offset makes a timestamp on the gPTP synchronization packet, the target UE or the target UPF network element corrects the clock of the target UE or the clock of the target UPF network element based on the clock offset.

It may be understood that, if the target UPF network element performs the RTT operation to determine the clock offset between the target UPF network element and the target RAN device, the TSCTSF network element may alternatively no longer send the clock offset to the target UE or the target UPF network element, and it is considered by default that the target UPF network element that initiates the RTT operation uses the clock offset to correct the clock.

In some scenarios, the target UPF network element may use a plurality of clocks, that is, the target UPF network element uses information about a plurality of clock domains. When the target UPF network element uses the plurality of clocks, the TSCTSF network element may further determine (or specify) a target clock from the plurality of clocks used by the target UPF network element as a clock used by the target UPF network element when the target UPF network element performs clock synchronization with the target RAN device or the target UE.

In addition, if the TSCTSF network element indicates the target UPF network element to initiate the measurement of the clock offset between the target UPF network element and the target RAN device, the first clock offset indication sent to the target UPF network element further includes an identifier of the target clock, and indicates that the target clock is a clock used by the target UPF network element when the target UPF network element performs clock synchronization with the target RAN device or the target UE. If the TSCTSF network element indicates the target RAN device to initiate the measurement of the clock offset between the target UPF network element and the target RAN device, the TSCTSF network element may further send a second clock offset measurement reply indication to the target UPF network element. The second clock offset measurement reply indication includes the identifier of the target clock and the identifier of the target RAN device, and indicates the target UPF network element to use the target clock to respond to the clock offset measurement that is initiated by the target RAN device. In addition, the second clock offset indication sent to the target RAN device may also include the identifier of the target clock, to indicate the target RAN device to perform offset measurement based on the target clock of the target UPF network element.

The information about the plurality of clocks used by the target UPF network element, for example, clock attributes of the plurality of clocks, may be reported by the target UPF network element to a clock management network element by using a setup request or another request. This is not limited in this application.

In some implementations, to help the TSCTSF network element learn of a clock used by the UPF network element corresponding to the clock offset, the first clock offset measurement indication response returned by the target UPF network element to the TSCTSF network element or the second clock offset measurement indication response returned by the target RAN device to the TSCTSF network element further includes the identifier of the target clock.

It should be understood that when the target UPF network element uses the plurality of clocks, that the clock of the target UPF network element is not synchronized with the clock of the target UE may mean that a clock of the target UE is not synchronized with the target clock of the target UPF network element, or may mean that the clock of the target UE is not synchronized with each clock of the target UPF network element. This is not limited in this application.

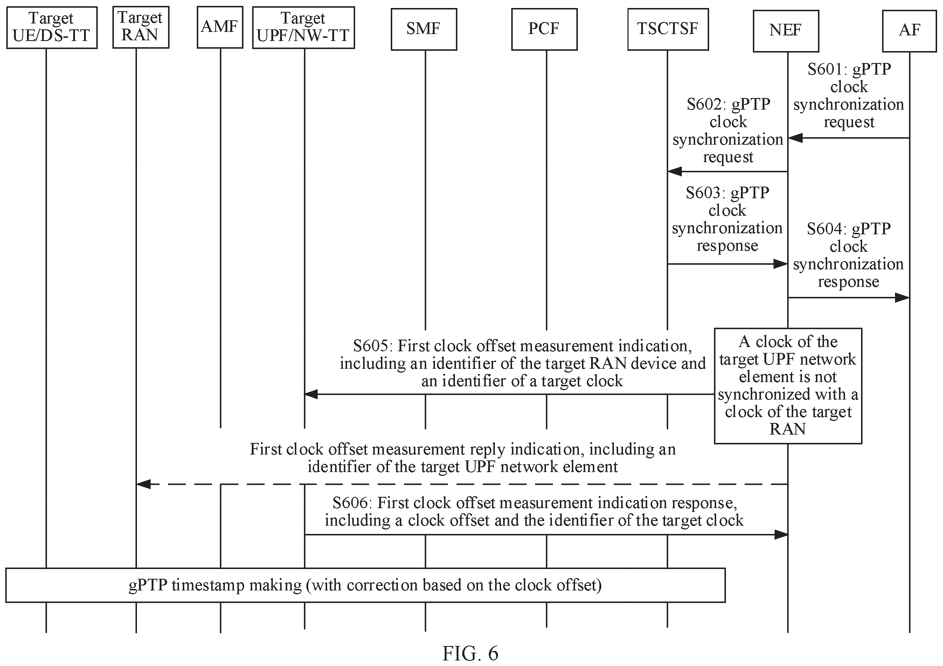

The following uses an example in which the target UPF network element initiates the measurement of the clock offset between the target UPF network element and the target RAN device for specific description with reference to the network architectures in FIG. 1A and FIG. 1B by using an embodiment in FIG. 6.

S601: An AF network element sends a gPTP clock synchronization request to a NEF network element, where the gPTP clock synchronization request includes an identifier of a target UPF network element and an identifier of a target UE.

S602: The NEF network element sends a gPTP clock synchronization request to a TSCTSF network element.

S603: The TSCTSF network element sends a gPTP clock synchronization response to the NEF network element.

S604: The NEF network element sends the gPTP clock synchronization response to the AF network element.

For implementations of S601 to S604, refer to the implementations of S501 to S504. Details are not described again.

S605: The TSCTSF network element sends a first clock offset measurement indication to the target UPF network element when a clock of the target UPF network element is not synchronized with a clock of a target RAN.

The first clock offset measurement indication includes an identifier of the target RAN device, and indicates the target UPF network element to initiate measurement of a clock offset between the target UFF network element and the target RAN device. The first clock offset measurement indication further includes an identifier of a target clock, and indicates the target UPF network element to use the target clock to perform clock synchronization with the target RAN device or the target UE. When performing clock offset measurement with the target RAN device, the target UPF network element uses the target clock.

Optionally, the TSCTSF network element may further send a first clock offset measurement reply indication to the target RAN device. The first clock offset measurement reply indication includes the identifier of the target UPF network element, and indicates the target RAN device to respond to clock offset measurement initiated by the target UPF, for example, respond to an RTT operation that is initiated by the target UPF network element.

S606: The TSCTSF network element receives a first clock offset measurement indication response from the target UPF network element, where the first clock offset measurement indication includes the clock offset between the target UPF network element and the target RAN device, and the identifier of the target clock.

The TSCTSF network element may learn of, based on the first clock offset measurement indication from the target UPF network element, the clock offset between the target UPF network element and the target RAN device when the target clock is used. The TSCTSF may send the clock offset to the target UE or the target UPF network element, to synchronize a clock of the target UE with a clock of the target UPF network element. To be specific, when the target UE or the target UPF network element (where the target clock is used) that receives the clock offset makes a timestamp on a gPTP synchronization packet, the target UE or the target UPF network element uses the clock offset to correct the clock of the target UE or the clock of the target UPF network element.

It may be understood that, if the target UPF network element initiates clock offset measurement to determine the clock offset between the target UPF network element and the target RAN device, the TSCTSF network element may alternatively no longer send the clock offset to the target UE or the target UPF network element, and it is considered by default that the target UPF network element that initiates the clock offset measurement uses the clock offset to correct the clock.

In FIG. 3 and FIG. 6, clock synchronization assurance is performed mainly from a perspective of obtaining the clock offset between the target RAN device that provides timing for the target UE and the target UPF network element, and using the clock offset to correct the clock during clock synchronization between the target UE and the target UPF network element. In some implementations, clock synchronization assurance may alternatively be performed by enabling the target RAN device or the target UPF network element to receive timing from a peer.

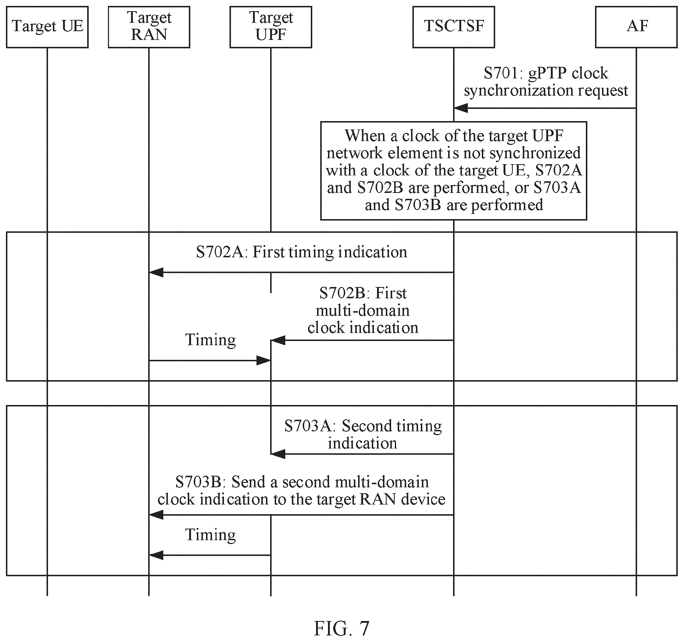

FIG. 7 is a diagram of another clock synchronization assurance method according to an embodiment of this application. The method includes the following steps.

S701: A TSCTSF network element receives a gPTP clock synchronization request from an AF network element, where the gPTP clock synchronization request includes an identifier of a target UPF network element and an identifier of a target UE.

When a clock of the target UPF network element is not synchronized with a clock of a target RAN, S702A and S702B are performed, or S703A and S703B are performed, where the target RAN device is a timing RAN device of the target UE.

S702A: The TSCTSF network element sends a first timing indication to the target RAN device.

S702B: The TSCTSF network element sends a first multi-domain clock indication to the target UPF network element.

The first timing indication includes the identifier of the target UPF network element and indicates the target RAN device to provide timing for the target UPF network element. The first multi-domain clock indication includes an identifier of the target RAN device and the identifier of the target UE and indicates the target UPF network element to receive the timing from the target RAN device, and perform clock synchronization with the target UE by using a clock from the target RAN device.

S703A: The TSCTSF network element sends a second timing indication to the target UPF network element.

S703B: Send a second multi-domain clock indication to the target RAN device.

The second timing indication includes an identifier of the target RAN device and indicates the target UPF network element to provide timing for the target RAN device. The second multi-domain clock indication includes the identifier of the target UPF network element and the identifier of the target UE and indicates the target RAN device to receive the timing from the target UPF network element, and provide timing for the target UE by using a clock from the target UPF network element.

The target RAN device is a timing RAN device of the target UE.

For an implementation of S701, refer to the implementation of S301. Details are not described again.

When the clock of the target UPF network element is not synchronized with a clock of the target UE, in a possible implementation, the TSCTSF network element may indicate the target UPF network element to receive the timing from the target RAN device. When the target UPF network element uses a plurality of clocks, and when clock synchronization with the target UE is involved (for example, for adding a timestamp to a gPTP synchronization packet to be sent to the target UE or a gPTP synchronization packet from the target UE), the target UPF network element uses a clock from the target RAN device for processing, to ensure that the target UPF network element and the target UE work in a same clock.

In another possible implementation, the TSCTSF network element may further indicate the target RAN device to receive the timing from the target UPF network element. When the target RAN device uses a plurality of clocks, the target RAN device uses a clock from the target UPF network element to provide timing for the target UE, to ensure that the target UPF network element and the target UE work in a same clock.

In addition, it may be understood that the TSCTSF network element may further indicate the target UPF network element to provide timing for the target UE. The target UE receives the timing from the target UPF. When the target UE uses a plurality of clocks (for example, a clock from the target RAN device and a clock from the target UE), the target UE performs clock synchronization with the target UPF network element by using the clock from the target UPF network element. For example, when receiving a gPTP synchronization packet from the target UPF network element, the target UE makes a timestamp by using the clock from the target UPF.

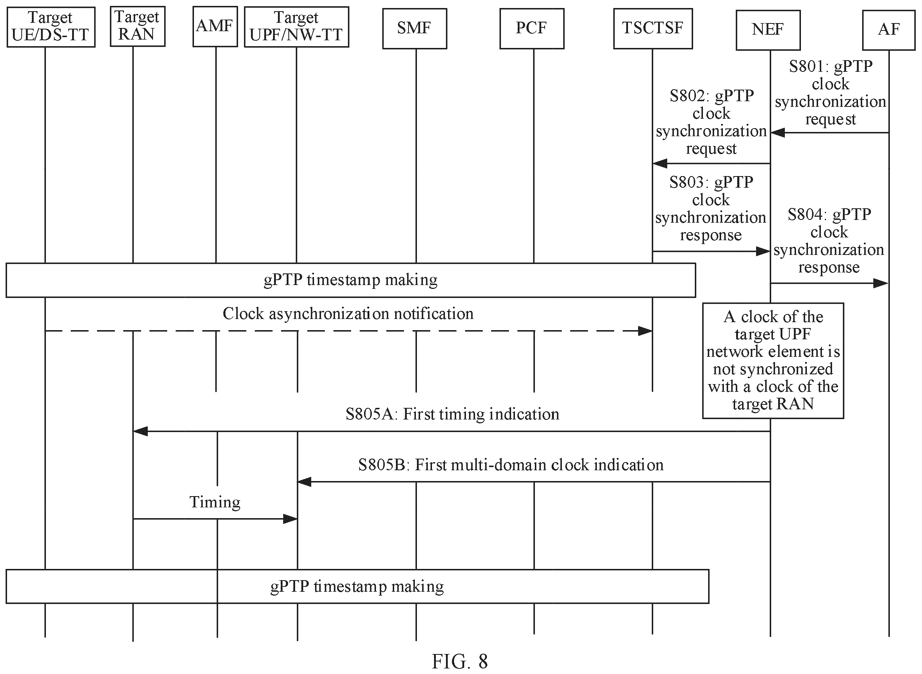

The following specifically describes the embodiment in FIG. 7 by using an example in which the TSCTSF network element indicates the target UPF network element to receive the timing from the target RAN device, with reference to the network architectures in FIG. 1A and FIG. 1B, and by using an embodiment in FIG. 8.

S801: An AF network element sends a gPTP clock synchronization request to a NEF network element, where the gPTP clock synchronization request includes an identifier of a target UPF network element and an identifier of a target UE.

S802: The NEF network element sends a gPTP clock synchronization request to the TSCTSF network element.

S803: The TSCTSF network element sends a gPTP clock synchronization response to the NEF network element.

S804: The NEF network element sends the gPTP clock synchronization response to the AF network element.

When a clock of the target UPF network element is not synchronized with a clock of a target RAN, S805A and S805B are performed.

For implementations of S801 to S804, refer to the implementations of S501 to S504. Details are not described again.

In FIG. 8, for example, when detecting that, in a transmitted gPTP synchronization packet, an identifier of a clock recorded in a timestamp added by the target UE is different from an identifier of a clock recorded in a timestamp added by the target UPF network element, the target UE sends a clock asynchronization notification including the identifier of the target UE and the identifier of the target UPF network element to the TSCTSF network element, and when receiving the clock asynchronization notification sent by the target UE, the TSCTSF network element determines that a clock of the target UE is not synchronized with the clock of the target UPF network element.

S805A: The TSCTSF network element sends a first timing indication to the target RAN device.

S805B: The TSCTSF network element sends a first multi-domain clock indication to the target UPF.

The first timing indication includes the identifier of the target UPF network element and indicates the target RAN device to provide timing for the target UPF network element. The first multi-domain clock indication includes an identifier of the target RAN device and the identifier of the target UE and indicates the target UPF network element to receive the timing from the target RAN device, and perform clock synchronization with the target UE by using a clock from the target RAN device. Optionally, the first multi-domain clock indication may further include port status information of a DS-TT port on the target UE.

After the target RAN device provides the timing for the target UPF network element, the target UPF network element maintains a clock that has a same clock parameter as the clock of the target RAN. Then, the target UPF network element uses the clock to make a timestamp on a gPTP synchronization packet to be sent to or from the target UE. In addition, if a UPF network element (for example, an NW-TT on the UPF network element) performs ratio measurement, the UPF network element performs ratio measurement by using a clock of a corresponding target RAN, for example, performs ratio measurement between a 5G communication system and a TSN system.

In some implementations, an available timing error budget of an air interface may be further flexibly adjusted based on a gPTP clock synchronization error budget for the target UE and the target UPF network element, to implement clock synchronization between the target UE and the target UPF network element.

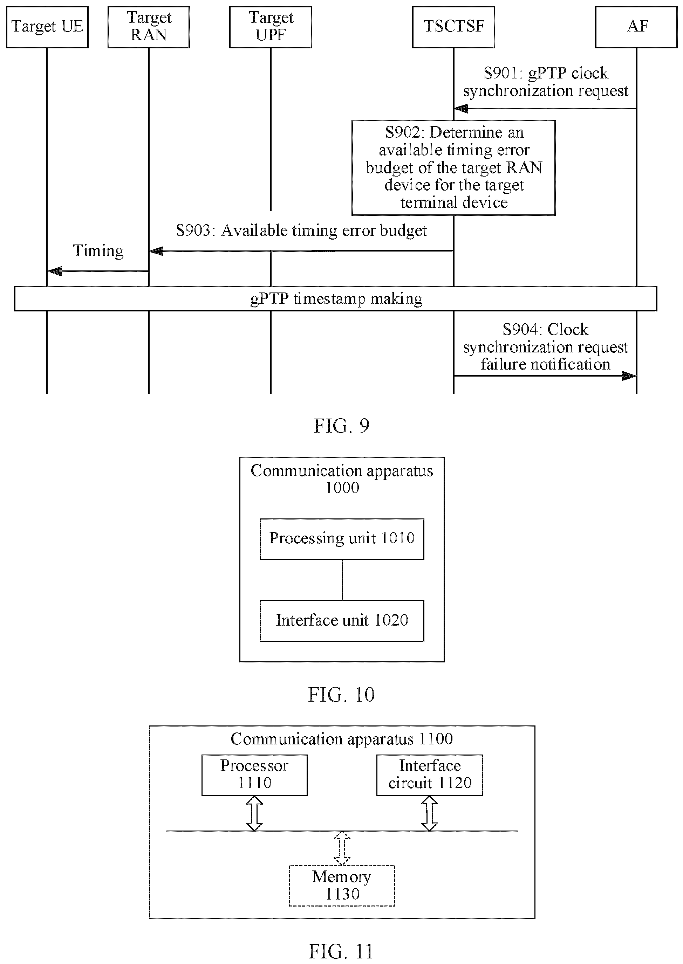

FIG. 9 is still another clock synchronization assurance method according to an embodiment of this application. The method includes the following steps.

S901: A TSCTSF network element receives a gPTP clock synchronization request from an AF network element.

The gPTP clock synchronization request includes a clock synchronization parameter. A clock management network element may obtain, from the clock synchronization parameter, an identifier of a target user plane function network element and an identifier of a target terminal device that transmit a gPTP synchronization packet, and a gPTP clock synchronization error budget during TSN clock synchronization.

For an implementation of S901, refer to the implementation of S301. Different from S301, in S901, the TSCTSF network element may further obtain the gPTP clock synchronization error budget from the gPTP clock synchronization request from the AF network element.

The gPTP clock synchronization error budget may be a clock error allowed by a device-side TSN system corresponding to the target UE and a network-side TSN network corresponding to the target UPF network element. The clock error may be preconfigured by a user of a TSN network based on a use requirement or the like.

S902: The TSCTSF network element determines an available timing error budget of a target RAN device for the target terminal device based on a clock error between the target UPF network element and the target RAN device, and the gPTP clock synchronization error budget, where the target RAN device is a timing RAN device of the target terminal device.

Specifically, the TSCTSF network element may determine, based on a difference between the gPTP clock synchronization error budget and an absolute value of a clock offset between the target UPF network element and the target RAN device, the available timing error budget, that is, an air interface available timing error budget, of the target RAN device for the target terminal device.

In some implementations, after the target UPF network element and the target RAN device are determined, a link for packet transmission between the target UPF network element and the target RAN device is usually fixed. The TSCTSF network element may further obtain an error caused by the link, and further subtract the error when determining the available timing error budget of the target RAN device for the target terminal device.

S903: The TSCTSF network element sends the available timing error budget to the target RAN device when the available timing error budget is within a timing error budget range supported by the target RAN device, where the available timing error budget is used by the target RAN device to provide timing for the terminal device.

S904: The TSCTSF network element sends a clock synchronization request failure notification to the AF network element when the available timing error budget is not within the timing error budget range supported by the target RAN device, where the clock synchronization request failure notification is for notifying that requested gPTP clock synchronization fails, that is, TSN clock synchronization fails. Optionally, the clock synchronization request failure notification may further carry a failure cause, for example, a clock of the target UPF network element is not synchronized with a clock of the target UE.

When the available timing error budget is within the timing error budget range supported by the target RAN device, the TSCTSF network element may send the available timing error budget to the target RAN device, and the target RAN device provides timing for the target UE by using the available timing error budget. In other words, the target RAN device ensures that an error of the timing for the target UE is within the available timing error budget, so that the target UE and the target UPF can make a timestamp on the gPTP synchronization packet, and obtained residence time is within the required gPTP clock synchronization error budget. This meets a TSN synchronization requirement.

It may be understood that the timing error (that is, a timing error) budget range supported by the target RAN device may be determined based on a minimum timing error that can be supported by hardware or software such as a clock of the target RAN device, that is, the timing error budget range supported by the target RAN device is greater than or equal to a range of the minimum timing error. In addition, the target RAN device usually has a timing error for the target UE within a specific range. If the available timing error budget is apparently greater than a timing error range for the target UE in which the target RAN device works, it may be considered that the timing of the target RAN device for the target UE meets a requirement of the available timing error budget, and the TSCTSF network element may alternatively no longer send the available timing error budget to the target RAN device.

When the available timing error budget is not within the timing error budget range supported by the target RAN device, the TSCTSF network element may send the clock synchronization request failure notification to the AF network element, to notify the AF network element that clock synchronization between the target UPF network element and the target UE fails.

Optionally, if the available timing error budget is not within the timing error budget range supported by the target RAN device, the TSCTSF network element may further use the methods in FIG. 3, FIG. 5, FIG. 6, FIG. 7, and FIG. 8, to ensure clock synchronization between the target UE and the target UPF.

It should be noted that, when a 5G communication system is used for gPTP clock synchronization, there is another possibility that an ingress of a gPTP packet is in one UE, and an egress of the gPTP packet is in another UE. In this case, the clock management network element needs to first determine whether clocks of the two UEs are synchronized with a same access network device. If there are different access network devices, one of the access network devices may be used as the UPF network element in the foregoing method. Specifically, an access network device corresponding to the ingress UE of the gPTP packet may be used as the UPF network element in the foregoing method, to perform the clock synchronization assurance method shown in FIG. 3, FIG. 5, FIG. 6, FIG. 7, or FIG. 8. Alternatively, an access network device corresponding to the egress UE of the gPTP packet may be used as the UPF network element in the foregoing method, to perform the clock synchronization assurance method shown in FIG. 3, FIG. 5, FIG. 6, FIG. 7, or FIG. 8. If the access network device is the same, when a clock of the access network device is switched/abnormal/holdover, the two UEs are still synchronized with the same access network device. In this case, the clock management network element may still reuse a conventional technology to perform gPTP clock synchronization on the two UEs, or temporarily mark a port number of a DS-TT on an affected UE as a disabled state.

It may be understood that, to implement functions in the foregoing embodiments, the clock management function network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 10 and FIG. 11 are diagrams of structures of possible communication apparatuses according to embodiments of this application. These communication apparatuses may be configured to implement functions of the clock management function network element in the foregoing method embodiments, and therefore can also implement beneficial effects of the foregoing method embodiments. In a possible implementation, the communication apparatus may be a clock management function network element, or may be a module (for example, a chip) used in the clock management function network element.

As shown in FIG. 10, the communication apparatus 1000 includes a processing unit 1010 and an interface unit 1020. The interface unit 1020 may alternatively be a transceiver unit or an input/output interface. The communication apparatus 1000 may be configured to implement functions of the network device or the terminal device in the method embodiments shown in FIG. 3 and FIG. 5 to FIG. 9.

When the communication apparatus 1000 is configured to implement functions of the clock management function network element in the method embodiments shown in FIG. 3, FIG. 5, and FIG. 6,
the interface unit 1020 is configured to receive a gPTP clock synchronization request from an application function network element, where the gPTP clock synchronization request includes an identifier of a target user plane function network element and an identifier of a target terminal device;
the processing unit 1010 is configured to: obtain, by using the interface unit 1020, a clock offset between the target user plane function network element and a target access network device when a clock of the target user plane function network element is not synchronized with a clock of the target terminal device, where the target access network device is an access network device providing timing for the target terminal device; and
the interface unit 1020 is further configured to send the clock offset to the target user plane function network element, where the clock offset is used by the target user plane function network element for clock synchronization with the target terminal device; or configured to send the clock offset to the target terminal device, where the clock offset is used by the target terminal device for clock synchronization with the user plane function network element.

In a possible design, when obtaining the clock offset between the target user plane function network element and the target access network device by using the interface unit 1020, the processing unit 1010 is specifically configured to: send a first clock offset measurement indication to the target user plane function network element by using the interface unit 1020, where the first clock offset measurement indication includes an identifier of the target access network device, and indicates the target user plane function network element to initiate measurement of the clock offset between the target user plane function network element and the target access network device; and receive a first clock offset measurement indication response from the target user plane function network element, where the first clock offset measurement indication includes the clock offset between the target user plane function network element and the target access network device.

**In** a possible design, when the target user plane function network element uses a plurality of clocks, the first clock offset measurement indication further includes an identifier of a target clock, and the first clock offset measurement indication response further includes the identifier of the target clock. The target clock is a clock that is determined by the processing unit 1010 from the plurality of clocks and that is used by the target user plane function network element to perform clock synchronization with the target access network device or the target terminal device.

**In** a possible design, when obtaining the clock offset between the target user plane function network element and the target access network device by using the interface unit 1020, the processing unit 1010 is specifically configured to: send a second clock offset measurement indication to the target access network device by using the interface unit 1020, where the second clock offset measurement indication includes the identifier of the target user plane function network element, and indicates the target access network device to initiate measurement of the clock offset between the target user plane function network element and the target access network device; and receive a second clock offset measurement indication response from the target access network device, where the second clock offset measurement indication response includes the clock offset between the target user plane function network element and the target access network device.

**In** a possible design, when the target user plane function network element uses a plurality of clocks, the second clock offset measurement indication further includes an identifier of a target clock, and the second clock offset measurement indication response further includes the identifier of the target clock. The target clock is a clock that is determined by the processing unit 1010 from the plurality of clocks and that is used by the user plane function network element to perform clock synchronization with the target access network device or the target terminal device.

In a possible design, the processing unit 1010 is further configured to send a second clock offset measurement reply indication to the target user plane function network element by using the interface unit 1020, where the second clock offset measurement reply indication includes the identifier of the target clock and an identifier of the target access network device, and indicates the target user plane function network element to respond, by using the target clock, to the measurement of the clock offset initiated by the target access network device.

In a possible design, when obtaining the clock offset between the target user plane function network element and the target access network device by using the interface unit 1020, the processing unit 1010 is specifically configured to: obtain a clock attribute of the clock of the target user plane function network element and a clock attribute of a clock of the target access network device by using the interface unit 1020; and determine the clock offset between the target user plane function network element and the target access network device based on the clock attribute of the clock of the target user plane function network element and the clock attribute of the target access network device.

In a possible design, the processing unit 1010 determines, when at least one of the following is satisfied, that a clock used by the target user plane function network element is not synchronized with a clock used by the target terminal device: The interface unit 1020 receives a clock switching notification from the target user plane function network element; the interface unit 1020 receives a clock switching notification from the target access network device; the interface unit 1020 receives a clock switching notification that is from a network management network element and that indicates that the clock of the target user plane function network element or a clock of the target access network device is switched; the interface unit 1020 receives a clock asynchronization notification from the target terminal device, where the clock asynchronization notification indicates that the clock of the target terminal device is not synchronized with the clock of the target user plane function network element; or the interface unit 1020 receives a clock asynchronization notification from the target user plane function network element, where the clock asynchronization notification indicates that the clock of the target user plane function network element is not synchronized with the clock of the target terminal device.

When the communication apparatus 1000 is configured to implement functions of the clock management function network element in the method embodiment shown in FIG. 9,
the interface unit 1020 is configured to receive a generalized precision time protocol gPTP clock synchronization request from an application function network element, where the gPTP clock synchronization request includes an identifier of a target user plane function network element, an identifier of a target terminal device, and a gPTP clock synchronization error budget;
the processing unit 1010 is configured to determine an available timing error budget of a target access network device for the target terminal device based on a clock offset between the target user plane function network element and the target access network device, and the gPTP clock synchronization error budget, where the target access network device is an access network device providing timing for the target terminal device; and
the interface unit 1020 is further configured to send the available timing error budget to the target access network device when the available timing error budget is within a timing error budget range supported by the target access network device, where the available timing error budget is used by the target access network device to provide timing for the terminal device.

In a possible design, the interface unit 1020 is further configured to send a clock synchronization request failure notification to the application function network element when the available timing error budget is not within the timing error budget range supported by the target access network device, where the clock synchronization request failure notification is for notifying that requested gPTP clock synchronization fails.

When the communication apparatus 1000 is configured to implement functions of the clock management function network element in the method embodiments shown in FIG. 7 and FIG. 8,
the processing unit 1010 is configured to determine that a clock of a target user plane function network element is not synchronized with a clock of a target terminal device; and
the interface unit 1020 is configured to send a first timing indication to a target access network device, and send a first multi-domain clock indication to the target user plane function network element, where the first timing indication includes an identifier of the target user plane function network element and indicates the target access network device to provide timing for the target user plane function network element, and the first multi-domain clock indication includes an identifier of the target access network device and an identifier of the target terminal device and indicates the target user plane function network element to receive the timing from the target access network device, and perform clock synchronization with the target terminal device by using a clock from the target access network device; or send a second timing indication to the target user plane function network element, and send a second multi-domain clock indication to a target access network device, where the second timing indication includes an identifier of the target access network device and indicates the target user plane function network element to provide timing for the target access network device, and the second multi-domain clock indication includes an identifier of the target user plane function network element and an identifier of the target terminal device and indicates the target access network device to receive the timing from the target user plane function network element, and provide timing for the target terminal device by using a clock from the target user plane function network element, where the target access network device is an access network device providing timing for the target terminal device.

In a possible design, the processing unit 1010 determines, when at least one of the following is satisfied, that a clock used by the target user plane function network element is not synchronized with a clock used by the target terminal device: The interface unit 1020 receives a clock switching notification from the target user plane function network element; the interface unit 1020 receives a clock switching notification from the target access network device; the interface unit 1020 receives a clock switching notification that is from a network management network element and that indicates that the clock of the target user plane function network element or the clock of the target access network device is switched; the interface unit 1020 receives a clock asynchronization notification from the target terminal device, where the clock asynchronization notification indicates that the clock of the target terminal device is not synchronized with the clock of the target user plane function network element; or the interface unit 1020 receives a clock asynchronization notification from the target user plane function network element, where the clock asynchronization notification indicates that the clock of the target user plane function network element is not synchronized with the clock of the target terminal device.

As shown in FIG. 11, this application further provides a communication apparatus 1100. The communication apparatus 1100 includes a processor 1110 and an interface circuit 1120. The processor 1110 is coupled to the interface circuit 1120. It may be understood that the interface circuit 1120 may be a transceiver, an input/output interface, an input interface, an output interface, a communication interface, or the like. Optionally, the communication apparatus 1100 may further include a memory 1130, configured to store instructions executed by the processor 1110, input data required by the processor 1110 to run instructions, or data generated after the processor 1110 runs instructions. Optionally, the memory 1130 may alternatively be integrated with the processor 1110.

When the communication apparatus 1100 is configured to implement the method shown in FIG. 3, and FIG. 5 to FIG. 9, the processor 1110 may be configured to implement functions of the foregoing processing unit 1010, and the interface circuit 1120 may be configured to implement functions of the foregoing interface unit 1020.

It should be noted that the processor in embodiments of this application may be a central processing unit (central processing unit, CPU), or may be another general-purpose processor, a digital signal processor (digital signal processor, DSP), an application specific integrated circuit (application specific integrated circuit, ASIC), a logical circuit, a field programmable gate array (field programmable gate array, FPGA), or another programmable logic device, a transistor logic device, a hardware component, or any combination thereof. The general-purpose processor may be a microprocessor or may be any conventional processor.

The steps of the methods in embodiments of this application may be implemented in hardware, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in the form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any available medium accessible to a computer or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

It may be understood that various numbers in embodiments of this application are merely used for differentiation for ease of description, and are not intended to limit the scope of embodiments of this application. Sequence numbers of the foregoing processes do not mean execution sequences, and the execution sequences of the processes should be determined based on functions and internal logic of the processes.

## Claims

1. A clock synchronization assurance method, comprising:
receiving, by a clock management network element, a generalized precision time protocol gPTP clock synchronization request from an application function network element, wherein the gPTP clock synchronization request comprises an identifier of a target user plane function network element and an identifier of a target terminal device;
obtaining, by the clock management network element, a clock offset between the target user plane function network element and a target access network device when a clock of the target user plane function network element is not synchronized with a clock of the target terminal device, wherein the target access network device is an access network device providing timing for the target terminal device; and
sending, by the clock management network element, the clock offset to the target user plane function network element, wherein the clock offset is used by the target user plane function network element for clock synchronization with the target terminal device; or
sending, by the clock management network element, the clock offset to the target terminal device, wherein the clock offset is used by the target terminal device for clock synchronization with the user plane function network element.

2. The method according to claim 1, wherein the obtaining, by the clock management network element, a clock offset between the target user plane function network element and a target access network device comprises:
sending, by the clock management network element, a first clock offset measurement indication to the target user plane function network element, wherein the first clock offset measurement indication comprises an identifier of the target access network device, and indicates the target user plane function network element to initiate measurement of the clock offset between the target user plane function network element and the target access network device; and
receiving, by the clock management network element, a first clock offset measurement indication response from the target user plane function network element, wherein the first clock offset measurement indication comprises the clock offset between the target user plane function network element and the target access network device.

3. The method according to claim 2, wherein when the target user plane function network element uses a plurality of clocks, the first clock offset measurement indication further comprises an identifier of a target clock, and the first clock offset measurement indication response further comprises the identifier of the target clock; and
the target clock is a clock that is determined by the clock management network element from the plurality of clocks and that is used by the target user plane function network element to perform clock synchronization with the target access network device or the target terminal device.

4. The method according to claim 1, wherein the obtaining, by the clock management network element, a clock offset between the target user plane function network element and a target access network device comprises:
sending, by the clock management network element, a second clock offset measurement indication to the target access network device, wherein the second clock offset measurement indication comprises the identifier of the target user plane function network element, and indicates the target access network device to initiate measurement of the clock offset between the target user plane function network element and the target access network device; and
receiving, by the clock management network element, a second clock offset measurement indication response from the target access network device, wherein the second clock offset measurement indication response comprises the clock offset between the target user plane function network element and the target access network device.

5. The method according to claim 4, wherein when the target user plane function network element uses a plurality of clocks, the second clock offset measurement indication further comprises an identifier of a target clock, and the second clock offset measurement indication response further comprises the identifier of the target clock; and
the target clock is a clock that is determined by the clock management network element from the plurality of clocks and that is used by the user plane function network element to perform clock synchronization with the target access network device or the target terminal device.

6. The method according to claim 5, wherein the method further comprises:
sending, by the clock management network element, a second clock offset measurement reply indication to the target user plane function network element, wherein the second clock offset measurement reply indication comprises the identifier of the target clock and an identifier of the target access network device, and indicates the target user plane function network element to respond, by using the target clock, to the measurement of the clock offset that is initiated by the target access network device.

7. The method according to any one of claims 1 to 6, wherein the obtaining, by the clock management network element, a clock offset between the target user plane function network element and a target access network device comprises:
obtaining, by the clock management network element, a clock attribute of the clock of the target user plane function network element and a clock attribute of a clock of the target access network device; and
determining, by the clock management network element, the clock offset between the target user plane function network element and the target access network device based on the clock attribute of the clock of the target user plane function network element and the clock attribute of the clock of the target access network device.

8. The method according to any one of claims 1 to 6, wherein the clock management network element determines, when at least one of the following is satisfied, that a clock used by the target user plane function network element is not synchronized with a clock used by the target terminal device:
the clock management network element receives a clock switching notification from the target user plane function network element;
the clock management network element receives a clock switching notification from the target access network device;
the clock management network element receives a clock switching notification that is from a network management network element and that indicates that the clock of the target user plane function network element or a clock of the target access network device is switched;
the clock management network element receives a clock asynchronization notification from the target terminal device, wherein the clock asynchronization notification indicates that the clock of the target terminal device is not synchronized with the clock of the target user plane function network element; or
the clock management network element receives a clock asynchronization notification from the target user plane function network element, wherein the clock asynchronization notification indicates that the clock of the target user plane function network element is not synchronized with the clock of the target terminal device.

9. A clock synchronization assurance method, comprising:
receiving, by a clock management network element, a generalized precision time protocol gPTP clock synchronization request from an application function network element, wherein the gPTP clock synchronization request comprises an identifier of a target user plane function network element, an identifier of a target terminal device, and a gPTP clock synchronization error budget;
determining, by the clock management network element, an available timing error budget of a target access network device for the target terminal device based on a clock offset between the target user plane function network element and the target access network device, and the gPTP clock synchronization error budget, wherein the target access network device is an access network device providing timing for the target terminal device; and
sending, by the clock management network element, the available timing error budget to the target access network device when the available timing error budget is within a timing error budget range supported by the target access network device, wherein the available timing error budget is used by the target access network device to provide timing for the terminal device.

10. The method according to claim 9, wherein the method further comprises:
sending, by the clock management network element, a clock synchronization request failure notification to the application function network element when the available timing error budget is not within the timing error budget range supported by the target access network device, wherein the clock synchronization request failure notification is for notifying that requested gPTP clock synchronization fails.

11. A clock synchronization assurance method, comprising:
determining, by a clock management network element, that a clock of a target user plane function network element is not synchronized with a clock of a target terminal device; and
sending, by the clock management network element, a first timing indication to a target access network device, and sending a first multi-domain clock indication to the target user plane function network element, wherein the first timing indication comprises an identifier of the target user plane function network element and indicates the target access network device to provide timing for the target user plane function network element, and the first multi-domain clock indication comprises an identifier of the target access network device and an identifier of the target terminal device and indicates the target user plane function network element to receive the timing from the target access network device, and perform clock synchronization with the target terminal device by using a clock from the target access network device; or
sending, by the clock management network element, a second timing indication to the target user plane function network element, and sending a second multi-domain clock indication to a target access network device, wherein the second timing indication comprises an identifier of the target access network device and indicates the target user plane function network element to provide timing for the target access network device, and the second multi-domain clock indication comprises an identifier of the target user plane function network element and an identifier of the target terminal device and indicates the target access network device to receive the timing from the target user plane function network element, and provide timing for the target terminal device by using a clock from the target user plane function network element, wherein
the target access network device is an access network device providing timing for the target terminal device.

12. The method according to claim 11, wherein the clock management network element determines, when at least one of the following is satisfied, that the clock of the target user plane function network element is not synchronized with the clock of the target terminal device:
the clock management network element receives a clock switching notification from the target user plane function network element;
the clock management network element receives a clock switching notification from the target access network device;
the clock management network element receives a clock switching notification that is from a network management network element and that indicates that the clock of the target user plane function network element or the clock of the target access network device is switched;
the clock management network element receives a clock asynchronization notification from the target terminal device, wherein the clock asynchronization notification indicates that the clock of the target terminal device is not synchronized with the clock of the target user plane function network element; or
the clock management network element receives a clock asynchronization notification from the target user plane function network element, wherein the clock asynchronization notification indicates that the clock of the target user plane function network element is not synchronized with the clock of the target terminal device.

13. A communication apparatus, comprising an interface unit and a processing unit, wherein
the interface unit is configured to receive a generalized precision time protocol gPTP clock synchronization request from an application function network element, wherein the gPTP clock synchronization request comprises an identifier of a target user plane function network element and an identifier of a target terminal device;
the processing unit is configured to obtain, by using the interface unit, a clock offset between the target user plane function network element and a target access network device when a clock of the target user plane function network element is not synchronized with a clock of the target terminal device, wherein the target access network device is an access network device providing timing for the target terminal device; and
the interface unit is further configured to send the clock offset to the target user plane function network element, wherein the clock offset is used by the target user plane function network element for clock synchronization with the target terminal device; or configured to send the clock offset to the target terminal device, wherein the clock offset is used by the target terminal device for clock synchronization with the user plane function network element.

14. The apparatus according to claim 13, wherein when obtaining the clock offset between the target user plane function network element and the target access network device by using the interface unit, the processing unit is specifically configured to: send a first clock offset measurement indication to the target user plane function network element by using the interface unit, wherein the first clock offset measurement indication comprises an identifier of the target access network device, and indicates the target user plane function network element to initiate measurement of the clock offset between the target user plane function network element and the target access network device; and receive a first clock offset measurement indication response from the target user plane function network element, wherein the first clock offset measurement indication comprises the clock offset between the target user plane function network element and the target access network device.

15. The apparatus according to claim 14, wherein when the target user plane function network element uses a plurality of clocks, the first clock offset measurement indication further comprises an identifier of a target clock, the first clock offset measurement indication response further comprises the identifier of the target clock, and the target clock is a clock that is determined by the processing unit from the plurality of clocks and that is used by the target user plane function network element to perform clock synchronization with the target access network device or the target terminal device.

16. The apparatus according to claim 13, wherein when obtaining the clock offset between the target user plane function network element and the target access network device by using the interface unit, the processing unit is specifically configured to: send a second clock offset measurement indication to the target access network device by using the interface unit, wherein the second clock offset measurement indication comprises the identifier of the target user plane function network element, and indicates the target access network device to initiate measurement of the clock offset between the target user plane function network element and the target access network device; and receive a second clock offset measurement indication response from the target access network device, wherein the second clock offset measurement indication response comprises the clock offset between the target user plane function network element and the target access network device.

17. The apparatus according to claim 16, wherein when the target user plane function network element uses a plurality of clocks, the second clock offset measurement indication further comprises an identifier of a target clock, the second clock offset measurement indication response further comprises the identifier of the target clock, and the target clock is a clock that is determined by the processing unit from the plurality of clocks and that is used by the user plane function network element to perform clock synchronization with the target access network device or the target terminal device.

18. The apparatus according to claim 17, wherein the processing unit is further configured to send a second clock offset measurement reply indication to the target user plane function network element by using the interface unit, wherein the second clock offset measurement reply indication comprises the identifier of the target clock and an identifier of the target access network device, and indicates the target user plane function network element to respond, by using the target clock, to the measurement of the clock offset that is initiated by the target access network device.

19. The apparatus according to any one of claims 13 to 18, wherein when obtaining the clock offset between the target user plane function network element and the target access network device by using the interface unit, the processing unit is specifically configured to: obtain a clock attribute of the clock of the target user plane function network element and a clock attribute of a clock of the target access network device by using the interface unit; and determine the clock offset between the target user plane function network element and the target access network device based on the clock attribute of the clock of the target user plane function network element and the clock attribute of the clock of the target access network device.

20. The apparatus according to any one of claims 13 to 18, wherein the processing unit determines, when at least one of the following is satisfied, that a clock used by the target user plane function network element is not synchronized with a clock used by the target terminal device:
the interface unit receives a clock switching notification from the target user plane function network element;
the interface unit receives a clock switching notification from the target access network device;
the interface unit receives a clock switching notification that is from a network management network element and that indicates that the clock of the target user plane function network element or a clock of the target access network device is switched;
the interface unit receives a clock asynchronization notification from the target terminal device, wherein the clock asynchronization notification indicates that the clock of the target terminal device is not synchronized with the clock of the target user plane function network element; or
the interface unit receives a clock asynchronization notification from the target user plane function network element, wherein the clock asynchronization notification indicates that the clock of the target user plane function network element is not synchronized with the clock of the target terminal device.

21. A communication apparatus, comprising an interface unit and a processing unit, wherein
the interface unit is configured to receive a generalized precision time protocol gPTP clock synchronization request from an application function network element, wherein the gPTP clock synchronization request comprises an identifier of a target user plane function network element, an identifier of a target terminal device, and a gPTP clock synchronization error budget;
the processing unit is configured to determine an available timing error budget of a target access network device for the target terminal device based on a clock offset between the target user plane function network element and the target access network device, and the gPTP clock synchronization error budget, wherein the target access network device is an access network device providing timing for the target terminal device; and
the interface unit is further configured to send the available timing error budget to the target access network device when the available timing error budget is within a timing error budget range supported by the target access network device, wherein the available timing error budget is used by the target access network device to provide timing for the terminal device.

22. The apparatus according to claim 21, wherein the interface unit is further configured to send a clock synchronization request failure notification to the application function network element when the available timing error budget is not within the timing error budget range supported by the target access network device, wherein the clock synchronization request failure notification is for notifying that requested gPTP clock synchronization fails.

23. A communication apparatus, comprising an interface unit and a processing unit, wherein
the processing unit is configured to determine that a clock of a target user plane function network element is not synchronized with a clock of a target terminal device; and
the interface unit is configured to send a first timing indication to a target access network device, and send a first multi-domain clock indication to the target user plane function network element, wherein the first timing indication comprises an identifier of the target user plane function network element and indicates the target access network device to provide timing for the target user plane function network element, and the first multi-domain clock indication comprises an identifier of the target access network device and an identifier of the target terminal device and indicates the target user plane function network element to receive the timing from the target access network device, and perform clock synchronization with the target terminal device by using a clock from the target access network device; or send a second timing indication to the target user plane function network element, and send a second multi-domain clock indication to a target access network device, wherein the second timing indication comprises an identifier of the target access network device and indicates the target user plane function network element to provide timing for the target access network device, and the second multi-domain clock indication comprises an identifier of the target user plane function network element and an identifier of the target terminal device and indicates the target access network device to receive the timing from the target user plane function network element, and provide timing for the target terminal device by using a clock from the target user plane function network element, wherein
the target access network device is an access network device providing timing for the target terminal device.

24. The apparatus according to claim 23, wherein the processing unit determines, when at least one of the following is satisfied, that a clock used by the target user plane function network element is not synchronized with a clock used by the target terminal device:
the interface unit receives a clock switching notification from the target user plane function network element;
the interface unit receives a clock switching notification from the target access network device;
the interface unit receives a clock switching notification that is from a network management network element and that indicates that the clock of the target user plane function network element or the clock of the target access network device is switched;
the interface unit receives a clock asynchronization notification from the target terminal device, wherein the clock asynchronization notification indicates that the clock of the target terminal device is not synchronized with the clock of the target user plane function network element; or
the interface unit receives a clock asynchronization notification from the target user plane function network element, wherein the clock asynchronization notification indicates that the clock of the target user plane function network element is not synchronized with the clock of the target terminal device.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 12 by using a logic circuit or executing instructions.

26. A computer program product, comprising instructions, wherein when the instructions are executed, the method according to any one of claims 1 to 12 is implemented.

27. A chip, wherein the chip is configured to implement the method according to any one of claims 1 to 12.

28. A computer-readable storage medium, wherein the storage medium stores a computer program or instructions, and when the computer program or the instructions are executed, the method according to any one of claims 1 to 12 is implemented.
